# EUROPÄISCHE PATENTSCHRIFT

(11) **EP 1 310 712 B1**
(45) Veröffentlichungstag und Bekanntmachung des Hinweises auf die Patenterteilung: **21.09.2011**
(21) Anmeldenummer: 02450236.1
(22) Anmeldetag: 16.10.2002
(51) Int. Cl.: F16K 15/10

(54) **Dichtelemente fur Kompressorventile**
Sealing elements for compressor valves
Eléments d'étanchéité pour soupapes de compresseur

(30) Priorität: 07.11.2001 AT 17542001
(43) Veröffentlichungstag der Anmeldung: 14.05.2003
(73) Patentinhaber: Hoerbiger Kompressortechnik Holding GmbH, 1220 Wien (AT)
(72) Erfinder: Spiegl, Bernhard, 1030 Wien (AT); Artner, Dietmar, 7400 Oberwart (AT)
(74) Vertreter: Pinter, Rudolf

(56) Entgegenhaltungen:
- EP-A- 0 933 566
- EP-A- 1 221 554
- DE-A- 3 145 147
- DE-A- 3 809 837
- GB-A- 1 025 713
- US-A- 3 994 319
- US-A- 5 192 200

## Beschreibung

Die Erfindung betrifft Dichtelemente, insbesonders Dichtplatten, Dichtringe und Dichtlamellen, für selbsttätige Kompressorventile, bestehend aus Kunststoff mit eingelagerter Faserverstärkung.

Derartige Dichtelemente sind seit einigen Jahren als Werkstoffe für Schließorgane von hochdynamisch beanspruchten selbsttätigen Kompressorventilen in Verwendung. Siehe dazu beispielsweise EP 40 930 A1, EP 933 566 A1 oder US 3 536 094 A. Im Falle von Kurzfaserverstärkungen (Faserlängen typischerweise im Bereich von 0,1 bis 0,3 mm) werden die Kunststoffe zumeist im Spritzgussprozess verarbeitet, was - abgesehen von manchmal formoder fertigungsbedingten geringfügigen Inhomogenitäten eine über die Bauteildicke sowie auch über Radius bzw. Länge homogene Struktur ergibt. Ähnlich ist dies auch bei langfaserverstärkten Kunststoffen mit in Form von Geweben oder auch einzelnen Faserbündeln (Rovings) eingelegten Faserverstärkungen, die ebenfalls relativ homogene Strukturen zeigen.

Obwohl faserverstärkte Kunststoffe prinzipiell gut bekannte und für derartige Dichtelemente eigentlich grundsätzlich auch bestens geeignete Eigenschaften haben, haben sich mit den bisher bekannten derartigen Dichtelementen oft Probleme mit einer nicht zufriedenstellenden Lebensdauer ergeben. Speziell bei hochdynamischen Belastungen in schneller laufenden Kompressoren treten oft bereits nach relativ kurzer Zeit Schädigungen oder Brüche auf, die bis dato einen weitergehenden Einsatz dieser vielversprechenden Werkstoffe verhindert haben.

Aufgabe der vorliegenden Erfindung ist es, die erwähnten Nachteile der bekannten Dichtelemente der genannten Art zu verhindern und insbesonders derartige Dichtelemente so auszugestalten, dass mit einfachen Mitteln höhere Lebensdauern erreichbar sind.

Die vorliegende Erfindung geht zur Lösung der gestellten Aufgabe von Überlegungen aus, die bei der Untersuchung von Proben ausgefallener (gerissener, gebrochener, ...) Dichtelemente nach dem Stande der Technik aufgetaucht sind. Die Werkstoffbeanspruchung und die damit verbundenen Anforderungen an den Werkstoff hängen stark von der jeweiligen lokalen Position im Bauteil ab. Beispielsweise stellt eine Schlagbeanspruchung (wie etwa beim Aufschlagen der Dichtplatte auf den Ventilsitz oder beim Anschlagen der Dichtlamelle an einer Öffnungsbegrenzung) an der Oberfläche des Dichtelementes gänzlich andere Anforderungen an den verwendeten Werkstoff als eine reine (auch hochdynamische) Biegung. Fasern an oder knapp unterhalb der Oberfläche derartig schlagbeanspruchter Elemente werden beim wiederholten Aufprall irgendwann gebrochen und können dann in weitere Folge vom Bruch ausgehend Risswachstum im umgebenden Werkstoff auslösen oder aber Verschleiß an den Ventilsitzen selbst herbeiführen. Ähnliche Überlegungen gehen beispielsweise dahin, dass Fasern im Kern der Dichtelemente kaum zur Biegesteifigkeit beitragen, jedoch das an sich erwünschte Dämpfungsverhalten stark reduzieren.

Ausgehend von diesen und verschiedenen weiteren Überlegungen in dieser Richtung besteht nun die erfindungsgemäße Lösung der angeführten Aufgabe darin, dass die Faserverstärkung und/oder der umgebende Kunststoff im fertigen Dichtelement unter Berücksichtigung lokal unterschiedlicher Anforderungen in inhomogener Verteilung und/oder mit lokal unterschiedlichen Materialeigenschaften vorliegt. Das heißt also, dass nun ganz gezielt abgestellt auf die jeweiligen lokal vorliegenden Anforderungen der Verbund von Kunststoff und Faserverstärkung optimal und genau passend auf diese Anforderungen bzw. zu deren Berücksichtigung definiert wird. Es kann damit an Orten die beispielsweise zur Berücksichtigung von impulsartigen Schlägen bzw. zur Hintanhaltung daraus resultierender Beschädigungen zäheren Werkstoff verlangen dieses Verbundsystem daraufhin abgestellt werden - beispielsweise indem weniger versteifende Faserverstärkung oder aber entsprechend zäherer Kunststoff (oder beides) vorgesehen wird. Gleiches gilt auch für Bereiche, in denen eine die Dämpfung behindernde Versteifung nicht erforderlich ist - auch hier kann durch entsprechende Materialkombination bzw. lokale Anordnung eine Berücksichtigung zu signifikanten Verbesserungen des gesamten Dichtelementes führen.

In besonders bevorzugter Ausgestaltung der Erfindung ist vorgesehen, dass die den Sitz- und/oder Anschlagflächen der fertigen Dichtelemente zugewandten oberflächennahen Bereiche, vorzugsweise bis zu einer mindestens dem zwei- bis drei-fachen des Faserdurchmessers entsprechenden Tiefe, frei von Faserverstärkung sind. Damit können auf der einen Seite die oben angesprochenen oberflächennahen Faserbrüche und die von dort unter Umständen ausgehenden Risse vermieden werden und andererseits auch Schläge durch diese verstärkungsfreien Schichten besser gedämpft bzw. verteilt werden.

Die faserfreien oberflächennahen Bereiche können nach weiters bevorzugter Ausgestaltung der Erfindung auch aus gegenüber dem sonstigen Dichtelement unterschiedlichen Werkstoffen, vorzugsweise mit höherer Zähigkeit und/oder höherer Dämpfung und/oder höherer Ermüdungsrissbeständigkeit, bestehen, was weitere Vorteile im Hinblick auf die Standfestigkeit der Dichtelemente bietet.

Nachdem durch diese faserfreien Deckschichten, insbesonders bei deren Ausgestaltung mit Werkstoffen erhöhter Zähigkeit, das übliche mechanische Herausarbeiten der Form des fertigen Dichtelementes aus einer Halbzeugplatte durch Fräsen oder dergleichen unter Umständen behindert werden kann, hat sich speziell für diese Anwendungen das Schneiden mit einem Wasserstrahl unter hohem Druck als besonders vorteilhaft erwiesen.

In den letztgenannten Zusammenhängen ist hier zu erwähnen, dass auch bei den bisher bekannten, eingangs angesprochenen Dichtelementen die unmittelbar äußerste Oberflächenschicht oft faserfrei ist, da sowohl bei der Spritzgussherstellung mit kurzfaserverstärkten Kunststoffen als auch bei der mittels kontinuierlicher oder diskontinuierlicher Pressverfahren erfolgenden Herstellung mit langfaserverstärkten Kunststoffen die äußersten, der Form anliegenden Fasern bis zu ihrer tatsächlichen Anlagelinie mit Kunststoff hinterflossen sind. Diese "faserfreien" Oberflächenschichten sind aber allenfalls nur äußerst dünn (im Bereich von wenigen tausendstel Millimeter) und werden zumeist bei der Fertigbearbeitung der Dichtelemente auch entfernt. Demgegenüber sind die faserfreien oberflächennahen Bereiche gemäß der vorliegenden Erfindung wesentlich dicker (typischerweise etwa 0,05 bis 0,2 mm) und werden bewusst bei der Endbearbeitung nicht entfernt. Weiters ist es auch beim sogenannten Zwei-Komponenten-Spritzgießen im Zusammenhang mit verschiedensten nicht faserverstärkten, eher niedrig belasteten Kunststoffartikeln bekannt nur im äußeren Oberflächenbereich des fertigen Produktes hochwertigen Werkstoff zu verwenden, der vor der Erstarrung von Innen her mit minderwertigem Werkstoff quasi aufgefüllt wird, womit sich in oberflächennahen Bereichen ein anderer Werkstoff ergibt. Bei diesen bekannten Herstellungsmethoden steht aber keinesfalls der Wunsch der Anpassung der lokalen Eigenschaften eines hochbelasteten Bauteils an die jeweils lokal vorliegende Beanspruchung im Vordergrund sondern lediglich das Bemühen durch das Überziehen eines relativ minderwertigen Kernwerkstoffes mit höherwertigem Oberflächenwerkstoff Kosteneinsparungen zu erzielen.

Nach einer weiters bevorzugten Ausgestaltung der Erfindung ist vorgesehen, dass eine zwischen Sitz- und Anschlagfläche gelegen Mittelschicht relativ zu den angrenzenden Schichten geringere Faserverstärkung, vorzugsweise einen gegenüber den angrenzenden Bereichen verringerten Faservolumenanteil, aufweist. Damit kann bevorzugt dem Umstand Rechnung getragen werden, dass - wie oben angeführt - diese mittleren Schichten zur erforderlichen Steifigkeit des Elementes weit weniger beitragen als beidseits davon gelegene oberflächennähere Schichten, wobei aber durch das in der Mittelschicht damit eher nicht sinnvoll verwendete Verstärkungsmaterial die an sich erwünschte Dämpfung des Gesamtelementes negativ beeinflusst wird. Durch diese nun vorgenommene Anpassung ist ein sogenannter "Gradientenwerkstoff" bereitgestellt, bei dem beispielsweise über die Dicke einer Dichtplatte auch mehrmals sich ändernde Faservolumenanteile realisiert sein können.

Die Faserverstärkung weist in weiterer Ausgestaltung der Erfindung zumindest ein im wesentlichen flächiges, nicht verwobenes Faservlies (Wirrfasermatte) mit in der Fläche zumindest weitgehend richtungsunabhängiger Faserorientierung und/oder zumindest ein im wesentlichen flächiges Fasergewebe oder -gewirk auf. Abgesehen von der natürlich ebenfalls gegebenen Möglichkeit einfach in unterschiedlichen Relativabständen über die Dicke des Dichtelementes verteilt gleichartige flächige Faserverstärkungen vorzusehen, können damit die Vorteile von relativ dichten flächigen Geweben oder Gewirken aus Langfasern (viele Verstärkungsfasern in dünner Schicht gepackt mit relativ großer Versteifungswirkung) mit den Vorteilen von relativ losen Wirrfasermatten (durch praktisch gleichmäßig verteilte Orientierung der nicht so dicht gepackten Langfasern ergibt sich eine verbesserte Dämpfung bei ausreichender Steifigkeit) kombiniert werden. Weiters könnten aber natürlich Faserverstärkungen auch durch einzelne Bündel oder Stränge von Langfasern dort separat oder zusätzlich angebracht werden, wo dies zur Berücksichtigung lokal unterschiedlicher Anforderungen erforderlich ist.

Im Rahmen der Erfindung kann ein derartiger "Gradientenwerkstoff" sowohl mit kurzfaserverstärkten Kunststoffen, beispielsweise im Spritzgussverfahren verarbeitet, als auch mit langfaserverstärkten Kunststoffen realisiert werden. Die Verarbeitung kann im letztgenannten Fall beispielsweise durch kontinuierliches Pressen auf einer Doppelbandpresse oder durch diskontinuierliches Pressen mit einzelnen Pressmatrizen erfolgen. Im Falle einer thermoplastischen Matrix wird Schmelze oder Pulver auf die Gewebe bzw. Faserverstärkung aufgebracht und anschließend beides gemeinsam verpresst oder es werden entsprechende Kunststofffolien mit Dicken im Bereich von 0,02 mm bis 2 mm gemeinsam mit Gewebe- oder Mattenverstärkungen gestapelt und unter Druck und erhöhter Temperatur verpresst. Bei duroplastischen Harzsystemen kann das Harz auf die flächigen Verstärkungen aufgebracht und unter Temperatur und Druck ausgehärtet werden.

Die inhomogene Verteilung der Faserverstärkung ist gemäß einer anderen vorteilhaften Ausgestaltung der Erfindung durch die Größe und/oder Form und/oder das Material und/oder die räumliche Anordnung bzw. Verteilung eines oder mehrerer der flächigen Faserverbünde bedingt. Dies ermöglicht auf einfachste Weise die Berücksichtigung lokal unterschiedlicher Anforderungen an Festigkeit, Steifigkeit, Dämpfung usw. des fertigen Dichtelementes.

Gemäß einer besonders bevorzugten Ausgestaltung der Erfindung ist die Länge der Einzelfasern im flächigen Faserverbund zumindest größtenteils größer 2mm, vorzugsweise zumindest größtenteils größer 4 mm, was eine - im Gegensatz zu den kurzfaserverstärkten Werkstoffen mit Faserlängen im Zehntelmillimeterbereich - ausreichende Verstärkungswirkung bei relativ geringem Faseranteil und damit auch ausreichend hoch bleibender Dämpfung ermöglicht.

Der mittlere Faservolumenanteil im fertigen Dichtelement liegt bevorzugt im Bereich von 5 - 30 %, besonders bevorzugt im Bereich von 10 bis 20 %, was - wie bereits oben erwähnt - die für derartige Dichtelemente und die auf diese einwirkenden, meist hochdynamischen Belastungen vorteilhafte Dämpfung im Dichtelement selbst bei ausreichender Steifigkeit nicht behindert.

Die Faserverstärkung besteht in weiters bevorzugter Ausgestaltung der Erfindung aus Glas-, Aramid-, Stahl-, Keramik- oder Kohlefaser, bzw. einer Mischung dieser, vorzugsweise aus Kohlefaser, und der umgebende Kunststoff aus duro- oder thermoplastischem Kunststoff, insbesonders Epoxidharz, Bismaleinimidharz, Polyurethanharz, Silikonharz, PEEK, PA, PPA, PTFE, PFA, PPS, PBT, PET, PI oder PAI, vorzugsweise aus PEEK, PFA oder PPS. All diese Werkstoffe bzw. die damit möglichen Materialkombinationen haben sich als für die Zwecke der Erfindung bestens geeignet erwiesen und stellen bei ausreichender Festigkeit und Steifigkeit der Dichtelemente auch ausreichende Dämpfungseigenschaften, Zähigkeit, Ermüdungsrissbeständigkeit und dergleichen zur Verfügung.

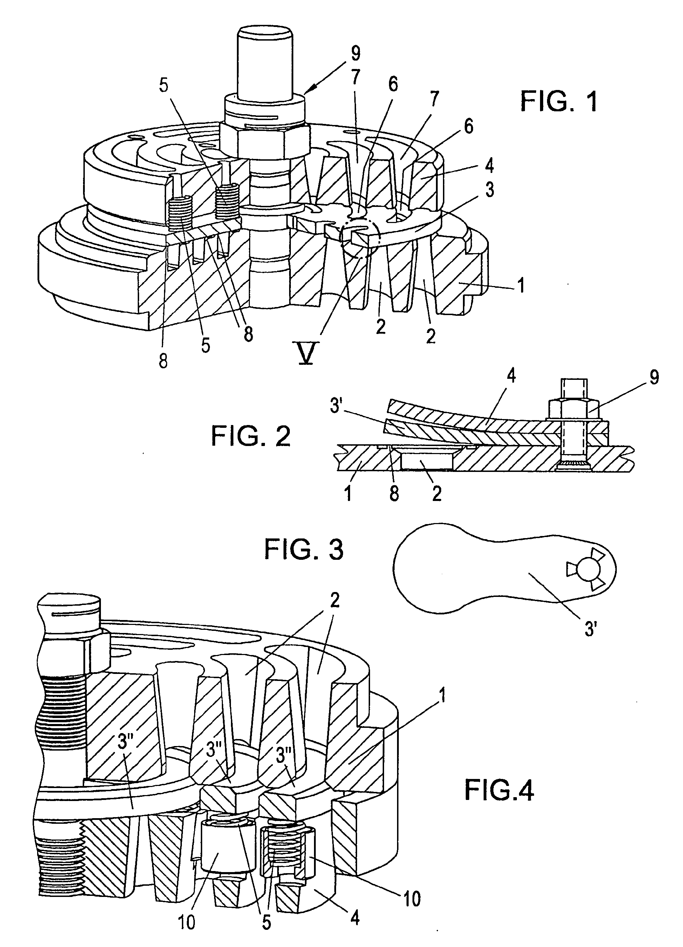

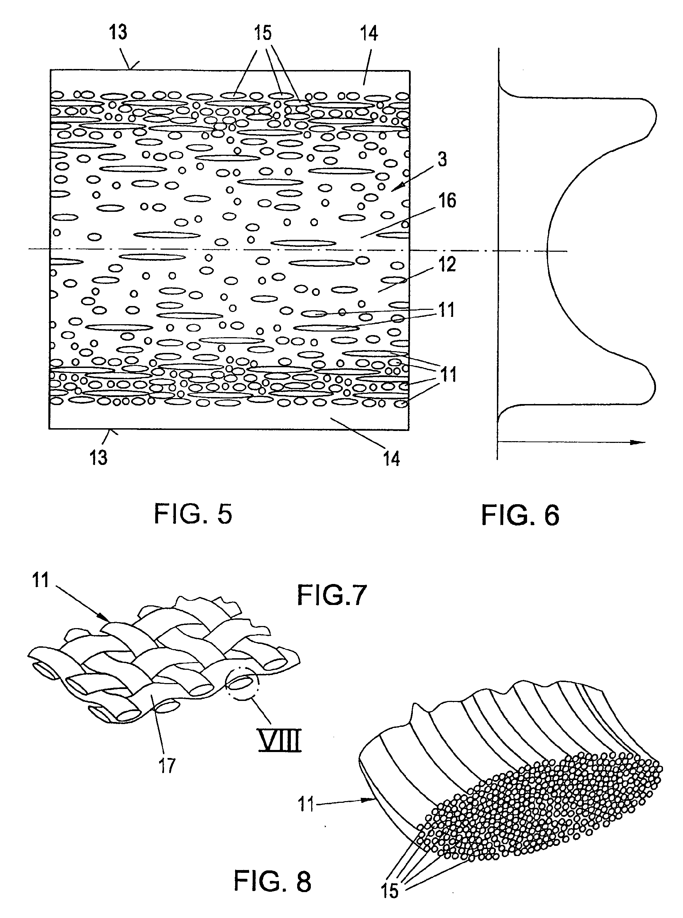

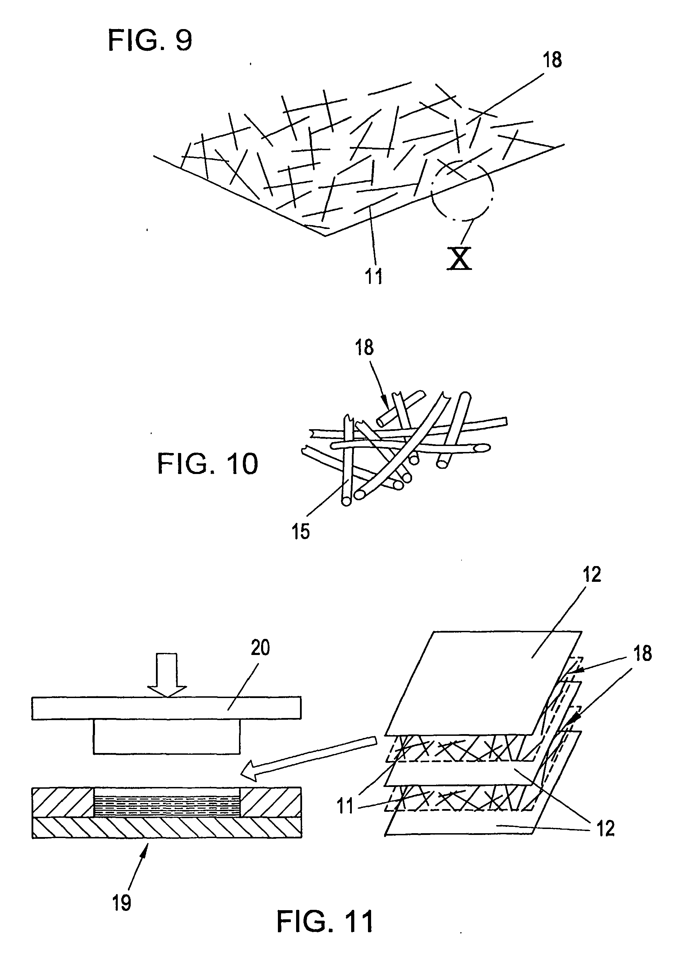

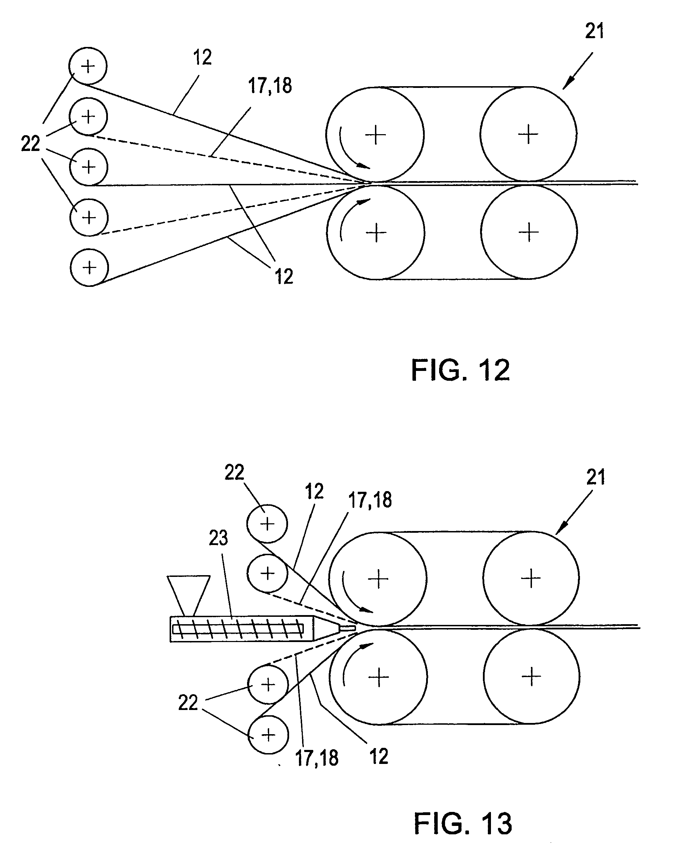

Die Erfindung wird im folgenden anhand der teilweise schematischen Zeichnungen näher erläutert. Es zeigen dabei: Fig. 1 eine perspektivische Ansicht eines teilweise geschnittenen Kompressorventils mit einer erfindungsgemäß ausgebildeten Dichtplatte, Fig. 2 einen teilweisen Schnitt durch ein Lamellenventil als Druckventil eines nicht weiter dargestellten Kompressors mit einer erfindungsgemäß ausgebildeten Dichtlamelle, Fig. 3 die Draufsicht auf die Dichtlamelle gemäß Fig. 2 von oben, Fig. 4 die perspektivische Ansicht eines teilweise aufgeschnittenen Kompressorventils mit einzelnen Dichtringen gemäß der vorliegenden Erfindung, Fig. 5 eine Vergrößerung des Querschnittes V in Fig. 1, und Fig. 6 ein die lokal bzw. schichtweise unterschiedliche Faserverstärkung im Querschnitt gemäß Fig. 5 symbolisierendes Diagramm, Fig. 7 die schematische Darstellung eines Teils eines Gewebes zur Verwendung als Faserverstärkung in einem Dichtelement beispielsweise gemäß den Fig. 1 bis 4, Fig. 8 das vergrößerte Detail VIII aus Fig. 7, Fig. 9 die schematische Darstellung eines Teils einer Wirrfasermatte zur Verwendung als Faserverstärkung in einem Dichtelement beispielsweise gemäß den Fig. 1 bis 4, Fig. 10 das vergrößerte Detail X aus Fig. 9, Fig. 11 eine schematische Verarbeitungseinrichtung für diskontinuierliches Pressen mit einer einzelnen Pressmatrize zur Herstellung einer Halbzeugplatte für ein erfindungsgemäßes Dichtelement, Fig. 12 und 13 beispielsweise Verarbeitungseinrichtungen zur Herstellung von Halbzeugbändern für erfindungsgemäße Dichtelemente durch kontinuierliches Pressen auf Doppelbandpressen.

Das selbsttätige Kompressorventil gemäß Fig. 1 besteht im wesentlichen aus einem Ventilsitz 1, dessen im wesentlichen ringförmig konzentrisch angeordnete Durchgangsöffnungen 2 von einer Dichtplatte 3 überdeckt sind, welche ihrerseits von einem Fänger 4 her mittels Spiralfedern 5 in Richtung Ventilsitz 1 belastet ist. Eine mittlere Schraube 9 hält die Komponenten zusammen; die Einbauumgebung ist nicht dargestellt. Nach Überschreiten einer durch die Federn 5 vorgebbaren Druckdifferenz öffnet die Dichtplatte 3 durch Abheben vom Ventilsitz 1 die Durchgangsöffnungen 2, womit Druckmedium über die konzentrischen Schlitze 6 in der Dichtplatte 3 und zugeordnete Abströmöffnungen 7 im Fänger 4 durchströmen kann.

Das Abheben der Dichtplatte 3 vom Ventilsitz 1 bzw. von dort herausgearbeiteten Dichtleisten 8, das Anschlagen auf der gegenüberliegenden Seite am Fänger 4 nach Überwindung eines durch die Bauweise des Ventils vorgegebenen Hubspaltes sowie das am Ende der Ventilöffnung wieder erfolgende Aufschlagen der Dichtplatte 3 am Ventilsitz 1 bzw. den Dichtleisten 8 erfolgt selbsttätig entsprechend der Hubbewegung des nicht dargestellten Kompressorkolbens und dem dadurch bedingten Mediumstrom dynamisch bis hochdynamisch, was entsprechend dynamische Belastungen der Dichtplatte 3 bedingt, die im Hinblick auf eine ausreichend hohe Lebensdauer aller beteiligten Komponenten besondere Anforderungen an Konstruktion und Werkstoffwahl stehlt.

Beim Lamellenventil nach Fig. 2 ist der Ventilsitz 1 nur mit einer kreisförmigen Durchgangsöffnung 2 versehen, deren Dichtleiste 8 mit einer im wesentlichen längserstreckten, einseitig mittels der Schraube 9 wiederum zusammen mit einem ebenfalls längserstreckten Fänger 4 am Ventilsitz 1 befestigten Dichtlamelle 3' zusammenwirkt. Die Dichtlamelle 3' ist hier nicht separat federbelastet und liegt im geschlossenen Zustand des Ventils gegebenenfalls unter innerer Vorspannung dicht am Ventilsitz auf - dargestellt in Fig. 2 ist eine bereits abgehobene Mittelstellung, bevor die Dichtlamelle 3' am Ende ihres möglichen Hubes vollständig am Fänger 4 anliegt. Abgesehen von der dargestellten Bauart mit einer einzigen, der Dichtlamelle 3 zugeordneten Durchgangsöffnung 2 könnten aber auch ohne weiteres mehrere benachbarte derartige Durchgangsöffnungen von einer gemeinsamen Dichtlamelle 3' überdeckt bzw. gesteuert werden. Auch hier entsteht durch die dynamische bis hochdynamische auf und ab Bewegung eines nicht weiter dargestellten Kompressorkolbens eine dynamische Bewegung und Belastung der Dichtlamelle 3' speziell an ihrem der Durchgangsöffnung 2 zugewandten freien Ende - zusätzlich tritt im Bereich zwischen der Schraube 9 und dem freien Ende der Dichtlamelle 3' noch eine dynamische Biegebelastung auf, was damit eine von Fig. 1 etwas abweichende Gesamtbelastung des Dichtelementes ergibt.

Das Kompressorventil gemäß Fig. 4 ist in gewisser Weise wieder ähnlich zu dem gemäß Fig. 1 - auch hier sind ein mit konzentrischen Durchgangsöffnungen 2 versehener Ventilsitz 1 und ein entsprechender Fänger 4 mittels einer zentralen Schraube 9 zusammengespannt. Anstelle der einstückigen Dichtplatte 3 sind hier aber nun einzelne konzentrische Dichtringe 3" vorgesehen, die vom Fänger 4 her mittels in Hülsen 10 angeordneter Federn 5 separat belastet sind und damit auch unabhängig voneinander Bewegungen zwischen Ventilsitz 1 und Fänger 4 ausführen können. Die Bewegung und Belastung der Dichtringe 3" erfolgt wiederum abhängig von der periodischen Kolbenbewegung des nicht weiter dargestellten Kompressors bzw. den davon bedingten Druckverläufen dynamisch, wobei sich durch die einzelnen Dichtringe 3" aber wiederum von der Situation im Ventil gemäß Fig. 1 abweichende Belastungscharakteristiken ergeben.

Allen in den Fig. 1 bis 4 dargestellten Anwendungsbeispielen erfindungsgemäßer Dichtelemente ist die dynamische bis hochdynamische Belastung durch Oberflächenschläge beim Anschlagen auf den Dichtkanten bzw. am Fänger gemeinsam, die hinsichtlich der konstruktiven Ausbildung und Werkstoffauswahl bei der hier im Vordergrund stehenden Ausbildung der Dichtelemente aus Kunststoff mit eingelagerter Faserverstärkung in allen Fällen zu ähnlichen vorteilhaften Lösungen der zu berücksichtigenden Probleme führt.

Erfindungsgemäß liegt die Faserverstärkung 11 gemäß den Fig. 5 bis 13 und/oder der umgebende Kunststoff 12 im fertigen Dichtelement 3, 3', 3" unter Berücksichtigung lokal unterschiedlicher Anforderungen in inhomogener Verteilung und/oder mit lokal unterschiedlichen Materialeigenschaften vor. Damit kann gezielt und abgestellt auf die jeweiligen lokal vorliegenden Anforderungen der Verbund von Kunststoff und Faserverstärkung optimal und genau auf diese Anforderungen bzw. zu deren Berücksichtigung definiert werden. Es kann damit beispielsweise gemäß Fig. 5 vorgesehen werden, dass die den Sitz- und Anschlagflächen 13 des fertigen Dichtelements 3 zugewandten oberflächennahen Bereiche 14, beispielsweise bis zu einer etwa dem dreifachen des Durchmessers der einzelnen Fasern 15 entsprechenden Tiefe, frei von Faserverstärkung 11 sind. Damit können oberflächennahe Faserbrüche, wie sie beispielsweise durch die hochdynamische Beanspruchung beim Aufschlagen des Dichtelementes 3 auf den Dichtleisten 8 entstehen können, und von dort unter Umständen ausgehende Risse verhindert und andererseits auch die Schläge selbst besser gedämpft bzw. die entstehenden Belastungen über den Querschnitt des Dichtelementes 3 verteilt werden. Diese faserfreien oberflächennahen Bereiche 14 können auch aus gegenüber dem im sonstigen Dichtelement 3 verwendeten Kunststoff unterschiedlichen Werkstoffen, beispielsweise mit höherer Zähigkeit oder Dämpfung, bestehen, was weitere Vorteile bietet.

Ebenfalls aus Fig. 5 und Fig. 6 ist zu ersehen, dass hier eine zwischen den Sitz- und Anschlagflächen 13 gelegene Mittelschicht 16 relativ zu den angrenzenden Schichten geringere Faserverstärkung, hier realisiert über einen gegenüber den angrenzenden Bereichen verringerten Faservolumenanteil, aufweist. Damit wird berücksichtigt, dass diese Mittelschicht 16 zur erforderlichen Steifigkeit des Dichtelementes 3 weit weniger beiträgt als die beidseits davon gelegenen oberflächennäheren Schichten, wobei aber durch in der Mittelschicht 16 damit eher nicht sinnvoll zu verwendendes Verstärkungsmaterial die an sich erwünschte Dämpfung des Gesamtelementes negativ beeinflusst würde.

Durch die Ausbildung und Anordnung der Faserverstärkung 11 gemäß den Fig. 5 und 6 ist ein "Gradientenwerkstoff" geschaffen, bei dem über die Dicke der Dichtplatte 3 mehrmals sich ändernde Faservolumenanteile realisiert sind. Der Übergang zwischen den einzelnen Bereichen bzw. Schichten ist hier eher fließend - davon abgesehen könnte aber auch ein mehr oder weniger deutlicher Sprung in den Eigenschaften zwischen den einzelnen Bereichen vorgesehen sein. Abgesehen von der Variation der lokalen Eigenschaften des Dichtelementes nur über dessen Dicke könnte beispielsweise zur Berücksichtigung der speziellen Belastungssituation in einer Dichtlamelle 3' gemäß Fig. 2 und 3 auch eine Änderung der Faserverstärkung und/oder des umgebenden Kunststoffes in Längsrichtung der Dichtlamelle 3' vorgesehen werden, womit die hochdynamische Biegebeanspruchung einerseits und die Schlagbeanspruchung andererseits besser berücksichtigt werden könnte.

Gemäß Fig. 7 und 8 können als Faserverstärkung 11 im wesentlichen flächige Fasergewebe oder -gewirke 17 vorgesehen sein, die aus Rovings genannten Faserbündeln mit einer großen Zahl Einzelfasern 15 bestehen. Davon abgesehen kann die flächige Faserverstärkung 11 gemäß den Fig. 9 bis 11 auch aus zumindest einem im wesentlichen flächigen, nicht verwobenen Faservlies 18 (einer sogenannten Wirrfasermatte, bzw. auf englisch "non-woven fibre fabric") mit in der Fläche zumindest weitgehend richtungsunabhängiger Faserorientierung bestehen (siehe dazu insbesonders Fig. 9 und 10). Durch den damit möglichen symmetrischen und gleichmäßigen Aufbau wird die Entstehung von Eigenspannungen und das Auftreten von Verzug in den Dichtelementen unterbunden. Zufolge der großen Faserlänge von bevorzugt zumindest größtenteils größer 2 mm ergibt sich in beiden Fällen eine hohe Verstärkungswirkung, wodurch die geforderte Steifigkeit der Dichtelemente bereits mit geringen Faseranteilen (bevorzugte mittlere Faservolumenanteile im fertigen Dichtelement im Bereich von 5 bis 30 %) realisiert werden kann. Es ergeben sich damit weiters günstige Dämpfungseigenschaften des Dichtelementes in Dickenrichtung und zufolge eines geringeren Moduls in Dickenrichtung auch eine hohe Dichtheit und ein rasches Eindichten in der Anwendung. Speziell die gleichmäßige bzw. richtungsunabhängige Verteilung der Einzelfasern 15 im Faservlies 18 verhindert Delaminationen an den Grenzflächen und ermöglicht beispielsweise auch im Falle von sehr hochviskosen Polymerschmelzen eine einfache Imprägnierung.

In Fig. 11 ist symbolisch die Herstellung einer Halbzeugplatte dargestellt, aus der dann beispielsweise durch Wasserstrahlschneiden (was auch bei relativ elastischen bzw. zähen Oberflächenschichten eine hervorragende Bearbeitungsqualität sicherstellt) Dichtelemente zur Verwendung in Anwendungen gemäß Fig. 1 bis 4 geschnitten werden können. Es werden abwechselnd Schichten von Kunststofffolien 12 und Faservlies 18 übereinandergelegt und in einer Pressmatrize 19 unter Erhitzung mittels eines Pressenstempels 20 verpresst. Über Anzahl, Dicke, Aufeinanderfolge, Werkstoffwahl u. dgl. der Schichten können so verschiedene Eigenschaften der Halbzeugplatte vorgegeben werden, womit das fertige Dichtelement genau auf den jeweiligen Anwendungsfall abgestellte Eigenschaften erhält. So kann beispielsweise durch dickere faserfreie Deckschichten und gegenüber dem sonstigen Dichtelementquerschnitt in der Mitte verringertem Faservolumenanteil ein Aufbau gemäß Fig. 5 und 6 erreicht werden, bei dem einerseits eine hervorragende Dämpfung des Dichtelementes bei ausreichender Steifigkeit sichergestellt ist und andererseits durch die Schlagbeanspruchungen an der Oberfläche keine oberflächennahen Faserbrüche mit folgendem Risswachstum auftreten können. Um lokal beispielsweise erhöhte Steifigkeit bieten zu können, könnte bedarfsweise zusätzlich zu oder anstelle von einzelnen Faservliesen 18 auch Gewebe 17 gemäß Fig. 7 verwendet werden, was in relativ dünnen Schichten hohe Verstärkungswirkung ermöglicht. Darüber hinaus wäre auch die separate bzw. zusätzliche Verwendung einzelner Langfaserbündeln (wie etwa in Fig. 8 dargestellt) möglich, um bestimmte lokale Anforderungen noch besser berücksichtigen zu können.

Gemäß Fig. 12 kann die Verarbeitung aber auch zu im wesentlichen bandförmigen Halbzeugen durch kontinuierliches Pressen auf einer Doppelbandpresse 21 erfolgen, wobei von Zuführrollen 22 aus abwechselnd Kunststofffolie 12 und Faservlies 18 bzw. Gewebe 17 zugeführt und im Bereich der Doppelbandpresse thermisch verpresst wird.

Gemäß Fig. 13 kann abweichend von Fig. 12 im Falle einer thermoplastischen Matrix Schmelze oder auch Pulver mit einer Zuführeinheit 23 zwischen die Faservliese 18 bzw. Gewebe 17 eingebracht und anschließend alles gemeinsam in der Doppelbandpresse 21 verpresst werden. Ähnliches gilt auch für duroplastische Harzsysteme, bei denen über die Zuführeinheit 23 Harz auf die Vliese 18 bzw. Gewebe 17 aufgebracht und unter Temperatur und Druck aushärten gelassen wird.

## Patentansprüche

1. Dichtelemente, insbesonders Dichtplatten (3), Dichtringe (3") und Dichtlamellen (3'), für selbsttätige Kompressorventile, bestehend aus einem heißverpressten Verbundwerkstoff aus Kunststoff mit eingelagerter Faserverstärkung (11), **dadurch gekennzeichnet, dass** die Faserverstärkung (11) und/oder der diese umgebende Kunststoff (12) im Verbundwerkstoff des Dichtelementes (3, 3', 3") unter Berücksichtigung lokal unterschiedlicher Anforderungen in inhomogener Verteilung und/oder mit lokal unterschiedlichen Materialeigenschaften vorliegt.

2. Dichtelemente nach Anspruch 1, **dadurch gekennzeichnet, dass** die den Sitz- und/oder Anschlagflächen (13) der fertigen Dichtelemente (3, 3', 3") zugewandten oberflächennahen Bereiche (14), vorzugsweise bis zu einer mindestens dem 2- bis 3-fachen des Faserdurchmessers entsprechenden Tiefe, frei von Faserverstärkung (11) sind.

3. Dichtelemente nach Anspruch 2, **dadurch gekennzeichnet, dass** die faserfreien oberflächennahen Bereiche (14) aus gegenüber dem sonstigen Dichtelement (3, 3', 3") unterschiedlichen Werkstoffen, vorzugsweise mit höherer Zähigkeit und/oder höherer Dämpfung und/oder höherer Ermüdungsrissbeständigkeit, bestehen.

4. Dichtelemente nach einem der Ansprüche 1 bis 3, **dadurch gekennzeichnet, dass** eine zwischen Sitz- und Anschlagfläche (13) gelegene Mittelschicht (16) relativ zu den angrenzenden Schichten geringere Faserverstärkung (11), vorzugsweise einen gegenüber den angrenzenden Bereichen verringerten Faservolumenanteil, aufweist.

5. Dichtelemente nach einem oder mehreren der Ansprüche 1 bis 4, **dadurch gekennzeichnet, dass** die Faserverstärkung (11) zumindest ein im wesentlichen flächiges, nicht verwobenes Faservlies (18) (Wirrfasermatte) mit in der Fläche zumindest weitgehend richtungsunabhängiger Faserorientierung und/oder zumindest ein im wesentlichen flächiges Fasergewebe oder-gewirk (17) aufweist.

6. Dichtelemente nach Anspruch 5, **dadurch gekennzeichnet, dass** die inhomogene Verteilung der Faserverstärkung (11) durch die Größe und/oder Form und/oder das Material und/oder die räumliche Anordnung bzw. Verteilung eines oder mehrerer der flächigen Faserverbünde (17, 18) bedingt ist.

7. Dichtelemente nach Anspruch 5 oder 6, **dadurch gekennzeichnet, dass** die Länge der Einzelfasern (15) im flächigen Faserverbund (17, 18) zumindest größtenteils größer 2 mm, vorzugsweise zumindest größtenteils größer 4 mm, ist.

8. Dichtelemente nach einem oder mehreren der Ansprüche 1 bis 7, **dadurch gekennzeichnet, dass** der mittlere Faservolumenanteil im fertigen Dichtelement (3, 3', 3") im Bereich von 5 - 30 %, bevorzugt 10 bis 20 %, liegt.

9. Dichtelemente nach einem oder mehreren der Ansprüche 1 bis 8, **dadurch gekennzeichnet, dass** die Faserverstärkung (11) aus Glas-, Aramid-, Stahl-, Keramik- oder Kohlefaser, bzw. einer Mischung dieser, vorzugsweise aus Kohlefaser, und der umgebende Kunststoff (12) aus duro- oder thermoplastischem Kunststoff, insbesonders Epoxidharz, Bismaleinimidharz, Polyurethanharz, Silikonharz, PEEK, PA, PPA, PTFE, PFA, PPS, PBT, PET, PI oder PAI, vorzugsweise aus PEEK, PA, PFA oder PPS, besteht.

## Claims

1. Sealing elements, particularly sealing plates (3), sealing rings (3"), and sealing lamellas (3') for automatic compressor valves composed of a hot-pressed composite material of plastic with embedded fiber reinforcement (11), **characterized in that** the fiber reinforcement (11) and/or the plastic (12) surrounding it in the composite material (12) of the sealing element (3, 3', 3") is present in an inhomogeneous distribution and/or with locally different material characteristics under consideration of locally different requirements.

2. Sealing elements according to claim 1, **characterized in that** the near-surface regions (14) which face towards the bearing surfaces and/or face surfaces (13) of the finished sealing elements (3, 3', 3") are free of fiber reinforcement (11) preferably up to a depth corresponding to at least two times to three times the fiber diameter.

3. Sealing elements according to claim 2, **characterized in that** the fiber-free regions (14) near the surface are composed of different materials compared to the other sealing element (3, 3', 3"), preferably with higher toughness and/or higher damping and/or higher fatigue cracking resistance.

4. Sealing elements according to one of claims 1 through 3, **characterized in that** a central layer (16), which is disposed between the bearing surface and the face surface (13), has less fiber reinforcement (11) relative to the adjacent layers, preferably a decreased proportion of fiber volume compared to the adjacent regions.

5. Sealing elements according to one or more of claims 1 through 4, **characterized in that** the fiber reinforcement (11) is composed of at least one essentially flat, non-woven fiber fabric (18) (random fiber mat), with in the surface at least largely directionally independent fiber orientation, and/or at least one essentially flat fiber fabric or fiber web (17).

6. Sealing elements according to claim 5, **characterized in that** the inhomogeneous distribution of the fiber reinforcement (11) is determined by the size and/or shape and/or material and/or the spatial arrangement or distribution of one or more of the flat fiber composites (17, 18).

7. Sealing elements according to claim 5 or 6, **characterized in that** the length of the individual fibers (15) in the flat fiber composite (17, 18) is at least largely more than 2 mm, preferably at least largely more than 4 mm.

8. Sealing elements according to one or more of claims 1 through 7, **characterized in that** the average proportion of fiber volume in the finished sealing element (3, 3', 3") is in the range of 5 - 30 %, preferably 10 to 20 %.

9. Sealing elements according to one or more of claims 1 through 8, **characterized in that** the fiber reinforcement (11) is composed of glass fibers, aramide fibers, steel fibers, ceramic fibers or carbon fibers or a mixture thereof, preferably of carbon fibers, and the surrounding plastic (12) is composed of thermosetting or thermoplastic material, in particular epoxy resin, bis-maleimide resin, polyurethane resin, silicone resin, PEEK, PA, PPA, PTFE, PFA, PPS, PBT, PET, PI or PAI, preferably PEEK, PA, PFA or PPS.

## Revendications

1. Eléments d'étanchéité, en particulier des plaquettes-joints (3), des bagues d'étanchéité (3") et des lamelles d'étanchéité (3') pour soupapes de compresseur automatiques, composés d'un matériau composite comprimé à chaud en matière plastique avec un renforcement par fibres intercalées (11), **caractérisés en ce que** le renforcement par fibres (11) et/ou la matière plastique (12) qui l'entoure est/sont présent(e)s dans le matériau composite de l'élément d'étanchéité (3, 3', 3") avec une répartition non homogène tenant compte d'exigences localement différentes et/ou avec des propriétés matérielles localement différentes.

2. Eléments d'étanchéité selon la revendication 1, **caractérisés en ce que** les zones (14) proches de la surface et tournées vers les surfaces de siège et/ou de butée (13) des éléments d'étanchéité (3, 3', 3") terminés sont exemptes de tout renforcement par fibres (11) de préférence jusqu'à une profondeur correspondant à au moins 2 à 3 fois le diamètre des fibres.

3. Eléments d'étanchéité selon la revendication 2, **caractérisés en ce que** les zones (14) proches de la surface et exemptes de fibres sont composées de matériaux différents du reste de l'élément d'étanchéité (3, 3', 3"), de préférence avec une ductilité supérieure et/ou un amortissement supérieur et/ou une plus grande résistance à la déchirure de fatigue.

4. Eléments d'étanchéité selon l'une quelconque des revendications 1 à 3, **caractérisés en ce qu'**une couche centrale (16) située entre la surface de siège et la surface de butée (13) présente un renforcement par fibres (11) inférieur par rapport aux couches adjacentes, de préférence une part ce volume en fibres réduite par rapport aux zones adjacentes.

5. Eléments d'étanchéité selon une ou plusieurs des revendications 1 à 4, **caractérisés en ce que** le renforcement par fibres (11) présente au moins un tissu fibreux non tissé (18) (feuille de fibres embrouillées) substantiellement plane avec une orientation de fibres largement non dirigée au niveau de la surface et/ou au moins un tissu ou maillage en fibres (17) substantiellement plan.

6. Eléments d'étanchéité selon la revendication 5, **caractérisés en ce que** la répartition non homogène du renforcement par fibres (11) est due à la taille et/ou à la forme et/ou au matériau et/ou à la disposition ou répartition dans l'espace d'une ou de plusieurs des fibres composites planes (17, 18).

7. Eléments d'étanchéité selon la revendication 5 ou 6, **caractérisés en ce que** la longueur des fibres individuelles (15) dans les fibres composites planes (17, 18) mesure au moins en majeure partie plus de 2 mm, de préférence au moins en majeure partie plus de 4 mm.

8. Eléments d'étanchéité selon une ou plusieurs des revendications 1 à 7, **caractérisés en ce que** la part de volume en fibres centrale dans l'élément d'étanchéité terminé (3, 3', 3") se situe dans la plage de 5 à 30 %, de préférence de 10 à 20 %.

9. Eléments d'étanchéité selon une ou plusieurs des revendications 1 à 8, **caractérisés en ce que** le renforcement par fibres (11) se compose de fibres de verre, d'aramide, d'acier, de céramique ou de carbone ou d'un mélange de celles-ci, de préférence de fibres de carbone, et la matière plastique (12) environnante se compose de matière plastique thermodurcissable ou thermoplastique, en particulier de résine époxy, de résine de bismaléimide, de résine de polyuréthane, de résine de silicone, de PEEK, PA, PPA, PTFE, PFA, PPS, PBT, PET, PI ou PAI, de préférence de PEEK, PA, PFA ou PPS.
